# EUROPÄISCHE PATENTSCHRIFT

(11) **EP 4 537 054 B1**
(45) Veröffentlichungstag und Bekanntmachung des Hinweises auf die Patenterteilung: **15.07.2026**
(21) Anmeldenummer: 23727933.6
(22) Anmeldetag: 15.05.2023
(51) Int. Cl.: G01C 19/5733, G01C 19/5684

(54) **MIKROELEKTROMECHANISCHE KOPPLUNGSVORRICHTUNG**
MICROELECTROMECHANICAL COUPLING DEVICE
DISPOSITIF DE COUPLAGE MICROÉLECTROMÉCANIQUE

(30) Priorität: 08.06.2022 DE 102022114406
(43) Veröffentlichungstag der Anmeldung: 16.04.2025
(73) Patentinhaber: Northrop Grumman LITEF GmbH, 79115 Freiburg (DE)
(72) Erfinder: RENDE, Jan Daniel, 66629 Freisen (DE)
(74) Vertreter: Müller Hoffmann & Partner
(86) Internationale Anmeldenummer: PCT/EP2023/062947
(87) Internationale Veröffentlichungsnummer: WO 2023/237297

(56) Entgegenhaltungen:
- WO-A1-2011/133682
- US-A1- 2003 164 040
- US-A1- 2014 245 831
- US-A1- 2016 084 654
- DEYONG CHEN ET AL: "An electrostatically actuated micromachined vibrating ring gyroscope with highly symmetric support beams", SENSORS, 2010 IEEE, IEEE, PISCATAWAY, NJ, USA, 1 November 2010 (2010-11-01), pages 860 - 863, XP031978273, ISBN: 978-1-4244-8170-5, DOI: 10.1109/ICSENS.2010.5690956

## Beschreibung

Die vorliegende Erfindung betrifft eine mikroelektromechanische Kopplungsvorrichtung zum Koppeln von mikroelektromechanischen Komponenten sowie eine mikroelektromechanische Messvorrichtung, insbesondere einen ringförmigen mikroelektromechanischen Drehratensensor, die die Kopplungsvorrichtung aufweist.

In mikromechanischen Messvorrichtungen wie etwa Drehraten- oder Beschleunigungssensoren müssen häufig verschiedene mikromechanische Komponenten, wie z.B. Schwingungssysteme oder Massen, miteinander verbunden werden, um die jeweiligen Bewegungen miteinander zu koppeln.

Oftmals wäre hierbei eine Kopplung durch einen frei schwebenden, nicht gelagerten Ring wünschenswert, da dieser auf eine radiale Krafteinwirkung mit einer Auslenkung reagiert, die, unabhängig von der Stelle in Umfangsrichtung, an der die radiale Krafteinwirkung erfolgt, die gleiche Amplitude hat. Ebenso kann es vorteilhaft sein, einen frei schwebenden Ring als Drehratensensor zu verwenden, in dem einer Anregungsschwingung bei Drehung aufgrund der Corioliskraft eine Detektionsschwingung überlagert wird.

Problematisch hierbei ist aber, dass ohne jegliche Verbindung zu einem Substrat der Messvorrichtung translatorische Moden die ersten Eigenmoden bilden. Diese sind aber häufig nicht erwünscht. Zudem ist die Herstellung eines nicht gelagerten Rings zur Kopplung von mikroelektromechanischen Komponenten fertigungstechnisch mit großem Aufwand verbunden.

Bekannt ist hier z.B. die Verwendung von steifen, kurzen Anbindungen (sogenannte Spokes), die zwar sehr platzsparend sind, die jedoch aufgrund ihrer Steifheit keine Resonanzen im Bereich von wenigen kHz ermöglichen. Zudem ist mit diesem Aufbau kein homogenes Verhalten in Umfangsrichtung zu erreichen.

Alternativ werden extrem lange und damit platzraubende, aber auch sehr weiche Federn eingesetzt. Damit können zwar niedrige Resonanzfrequenzen realisiert werden, allerdings sind auch hier die Abweichungen zum idealen Ring sehr groß, da kein homogenes Verhalten in Umfangsrichtung erreicht werden kann.

Es soll also eine möglichst homogene Lagerung der Ringstruktur erreicht werden, mit der die perfekte Symmetrie der Ringstruktur möglichst geringfügig beeinflusst wird. Dies ließe sich durch einen kompletten Wegfall der Lagerung erreichen, was aber nur sehr schwer umsetzbar ist. Bei der alternativen Verwendung vieler Federn, die über den Umfang verteilt sind, dürfen die Federn nicht zu steif sein, da sie sonst den Ring lokal zu stark beeinflussen und die Eigenfrequenzen des Gesamtsystems erhöhen. Es besteht deshalb der Zielkonflikt eine möglichst weiche Kopplung bereitzustellen, die aber gleichzeitig nicht zu viel Bauraum benötigt.

Dokument WO 2011/133682 A1 offenbart eine Vorrichtung zum Messen der Anregung, d. h. der Schwingung, in einer piezoelektrischen Struktur eines piezoelektrischen mikroelektromechanischen Gyroskops, d. h. eines Z-Achsen-Gyroskops, mit einer Antriebselektrode, die dazu ausgelegt ist, die Resonanzstruktur im ersten Modus anzuregen.

Der vorliegenden Erfindung liegt damit die Aufgabe zugrunde, eine mikroelektromechanische Kopplungsvorrichtung bzw. einen ringförmigen mikroelektromechanischen Drehratensensor anzugeben, die die oben genannten Vorteile eines frei schwebenden, nicht gelagerten Rings realisieren, ohne zu den oben genannten Nachteilen zu führen.

Diese Aufgabe wird durch den Gegenstand des Anspruchs 1 gelöst.

Eine mikroelektromechanische Kopplungsvorrichtung zum Koppeln von mikroelektromechanischen Komponenten weist eine flexible Ringstruktur auf, die in Ruhe einen Kreis formt, die im Wesentlichen parallel zu der Ebene des Kreises verformt werden kann und die zur Kopplung der mikroelektromechanischen Komponenten geeignet ist. Zudem weist die Kopplungsvorrichtung eine Mehrzahl von Federelementen auf, die geeignet sind, die Ringstruktur mit einem Substrat zu verbinden, wobei die Kopplungsvorrichtung eine derart große Anzahl der Federelemente, mit einer derart geringen Breite in Umfangsrichtung der Ringstruktur und einer derart geringen Federhärte aufweist, dass die Verformbarkeit der Ringstruktur in Umfangsrichtung der Ringstruktur homogen ist.

Die Kopplungsvorrichtung weist also als Grundstruktur einen Ring auf, der über einem Substrat gelagert ist und z.B. die Form eines in sich geschlossenen Stegs aufweist, dessen Höhe senkrecht zum Substrat ein Vielfaches seiner Breite parallel zum Substrat aufweist. In der Ruhelage bildet dieser Ringeinen Kreis im weitesten Sinn, d.h. eine geschlossene Kurve, der parallel zum Substrat liegt. Eine Verformung des Rings ist dann im Wesentlichen nur parallel zum Substrat möglich, d.h. Auslenkungen senkrecht zum Substrat sind für den Betrieb vernachlässigbar.

Um die translatorischen Moden zu unterdrücken, ist die Ringstruktur über eine große Anzahl von Federelementen mit dem Substrat verbunden, wobei die Verbindung zum Substrat hier nicht direkt erfolgen muss, d.h. zwischen dem Substrat und den Federelementen können weitere Elemente zwischengeschalten sein. Die große Anzahl von Federelementen garantiert hierbei, dass die Ringstruktur an vielen Stellen entlang der Umfangsrichtung an das Substrat gekoppelt ist. Hierzu müssen die Federelemente in Umfangsrichtung der Ringstruktur ausreichend schmal ausgestaltet sein, damit es zu keiner Störung ihrer jeweiligen Bewegungen untereinander kommt. Zuletzt muss auch die Federhärte jedes der Federelemente ausreichend gering sein, um die gewünschte freie Verformbarkeit der Ringstruktur nicht übermäßig einzuschränken.

Die Parameter der Anzahl der Federelemente, ihrer Breite in Umfangsrichtung und ihrer Federhärte stehen dabei in wechselseitiger Abhängigkeit. So kann bei der Verwendung von sehr weichen Federelementen die Anzahl der Federelemente reduziert und ihre Breite vergrößert werden. Bei der Verwendung härterer Federelemente kann die Anzahl erhöht, bzw. die Breite verringert werden.

Es gibt also eine Vielzahl von Möglichkeiten, die Parameter der Federelemente konkret festzulegen. Ausschlaggebend ist hierbei aber allein, dass die gewählten Parameter die Verformbarkeit der Ringstruktur nur insofern einschränken, dass die Ringstruktur in Umfangsrichtung ihre homogene Federcharakteristik beibehält. Die Ringstruktur muss also durch die Federelemente derart an das Substrat gekoppelt werden, dass sie auf eine radiale Krafteinwirkung mit einer Auslenkung reagiert, die an jeder Stelle in Umfangsrichtung, an der die radiale Krafteinwirkung erfolgt, (in erster Näherung) die gleiche Amplitude/Verformung hat. Das Gesamtsystem von Federelementen und Ringstruktur muss also bei einer Anregung von außen, insbesondere durch angekoppelte mikroelektromechanische Komponenten, (in erster Näherung) wie ein translatorisch fixierter, aber ansonsten frei schwebender Ring reagieren. Das Gesamtsystem von Ringstruktur und Federelementen wirkt damit von außen wie ein frei schwebender Ring, mit gegenüber der Ringstruktur verschobener Federhärte.

Damit lassen sich Kopplungsvorrichtungen realisieren, die von außen wie frei schwebende Ringe wirken, die aber aufgrund der Rückbindung ans Substrat unterdrückte translatorische Moden haben. Zudem erlaubt die große Anzahl von Federelementen, eine ausreichend weiche Kopplung, um auch Anregungsmoden im kHz-Bereich zu realisieren, die für mikroelektromechanische Messvorrichtungen, insbesondere für ringförmige Drehratensensoren von besonderem Interesse sind.

Der Begriff Kopplungsvorrichtung ist hierbei weit zu verstehen und soll die Kopplung oder Verbindung von verschiedensten mikroelektromechanischen Komponenten wie Massen, Federn, Schwingungssystemen oder Elektroden umfassen. Die Kopplungsvorrichtung kann insbesondere das Schwingungssystem eines ringförmigen Drehratensensors darstellen. Dann sind die mikroelektromechanischen Komponenten an die Ringstruktur gekoppelt, um Anregungs- oder Detektionsschwingungen der Ringstruktur hervorzurufen bzw. zu messen. Bei den mikroelektromechanischen Komponenten kann es sich in diesem Fall aber auch lediglich um Verbindungen zum Substrat handeln, wie z.B. die Federelemente.

Gemäß der Erfindung ist das Verhältnis der effektiven Gesamtsteifigkeit der Federelemente während des Betriebs der Kopplungsvorrichtung in einer Schwingungsmode zum Produkt aus der Anzahl der Federelemente und der effektiven Steifigkeit der Ringstruktur in der entsprechenden Schwingungsmode hierbei kleiner oder gleich 1. Die effektive Gesamtsteifigkeit der Federelemente gibt hierbei an, wie die Federelemente insgesamt auf Auslenkungen/Schwingungen des Rings reagieren und berücksichtigt hierdurch die Tatsache, dass unterschiedliche Federn während der Schwingung in unterschiedlicher Weise, insbesondere in unterschiedliche Richtungen, ausgelenkt werden, und daher jede für sich genommen mit einer anderen Federsteifigkeit beiträgt. Ebenso verhält es sich mit der Federsteifigkeit der Ringstruktur, die daher auch als effektive Steifigkeit, d.h. als im konkreten Fall tatsächlich messbare Steifigkeit, in den Vergleich eingeht. Sind also z.B. 20 Federn vorhanden und beträgt die effektive Steifigkeit der Ringstruktur ca. 15 N/m, ergibt sich für die effektive Gesamtsteifigkeit aller Federn in der entsprechenden Schwingungsmode eine Obergrenze von 300 N/m. Für 40 Federn und eine effektiven Steifigkeit der Ringstruktur von ca. 30 N/m ergibt sich entsprechend eine Obergrenze für die effektive Gesamtsteifigkeit aller Federn von 1200 N/m.

Die Federelemente können entweder alle mit einer Innenseite der Ringstruktur oder alle mit einer Außenseite der Ringstruktur verbunden sein. Die Kopplung der Ringstruktur kann also flexibel je nach Einsatz der Ringstruktur von der Ringstruktur nach innen oder nach außen geführt werden. Greifen alle Federelemente nur an einer Seite der Ringstruktur an, ermöglicht dies eine kräfte- und momentenfrei Kopplung von mikroelektromechanischen Komponenten über die Ringstruktur.

Die Federelemente können als Serpentinenfedern ausgebildet sein, d.h. die Federelemente bestehen aus einer Vielzahl von Biegebalkenfedern, die sich entlang der Umfangsrichtung der Ringstruktur erstrecken und jeweils abwechselnd an ihren Enden miteinander verbunden sind, so dass eine serpentinenartige Form oder eine Zickzacklinie entsteht. Derartige Federn können sowohl in Umfangsrichtung als auch in radialer Richtung kompakt ausgebildet werden und weisen trotzdem eine geringe Federhärte auf, die zu Resonanzfrequenzen der Kopplungsvorrichtung im kHz Bereich führt. Sie eignen sich damit besonders für die Kopplung der Ringstruktur an das Substrat. Die Serpentinenfedern können hierbei zwischen 5 und 50 in Umfangsrichtung verlaufende Biegebalkenfedern aufweisen, z.B. 10, 20 oder 30.

Die Federelemente können gleichmäßig entlang der Umfangsrichtung der Ringstruktur verteilt sein. Dies erleichtert die Fertigung, da dann für die homogene Verformbarkeit der Ringstruktur sämtliche Federelemente gleich ausgestaltet werden können, d.h. die gleiche Federhärte aufweisen.

Die Anzahl der Federelemente kann größer oder gleich 4, 8, 16 oder 30, vorzugsweise größer oder gleich 40, weiter vorzugsweise größer oder gleich 50 ist. Damit ist gewährleistet, dass eine Ausreichend große Dichte von Federelementen entlang der Umfangsrichtung vorhanden ist. Dies verbessert die Homogenität der Verformbarkeit der Ringstruktur.

Die Breite der Federelemente in Umfangsrichtung kann kleiner oder gleich 1/4, 1/8, 1/16 oder 1/30, vorzugsweise kleiner oder gleich 1/40, weiter vorzugsweise kleiner oder gleich 1/50 des Umfangs der Ringstruktur ist. Die Federelemente sind dann ausreichend schmal, um an einer Vielzahl von Positionen entlang des Umfangs der Ringstruktur mit dieser gekoppelt zu werden.

Die Federelemente können sich entlang einer radialen Richtung der Ringstruktur über weniger als 1/2 oder 1/4, vorzugsweise über weniger als 1/5, weiter vorzugsweise über weniger als 1/8 des Radius der in Ruhe befindlichen Ringstruktur erstrecken. Dies erlaubt es, die Kopplungsvorrichtung kompakt zu gestalten, da die Federelemente auch in radialer Richtung wenig Platz einnehmen.

Die Kopplungsvorrichtung kann des Weiteren eine zweite Ringstruktur aufweisen, wobei die Mehrzahl der Federelemente mit der Ringstruktur und der zweiten Ringstruktur verbunden sind und die Verbindung der Ringstruktur mit dem Substrat über die zweite Ringstruktur erfolgt, welche vorzugsweise wiederum mit weiteren Federelementen an das Substrat angebunden ist. Die Federelemente koppeln also zwei Ringstrukturen aneinander. An die zweite Ringstruktur können dann weitere gleichartige Federelemente angekoppelt werden. Es können aber auch andere mikroelektromechanische Bauteile oder Federelemente zu Verbindung der zweiten Ringstruktur mit dem Substrat verwendet werden. Auch ist eine Staffelung einer Mehrzahl von mit weichen Federelementen verbundenen Ringstrukturen denkbar. Dies erhöht die Flexibilität im Aufbau der Kopplungsvorrichtung und im Aufbau von die Kopplungsvorrichtung enthaltenden Messvorrichtungen.

Eine mikroelektromechanische Messvorrichtung weist eine mikroelektromechanische Kopplungsvorrichtung wie sie oben beschrieben wurde und die mikroelektromechanischen Komponenten auf, die mit der Kopplungsvorrichtung verbunden sind. Damit werden die durch die Kopplungsvorrichtung realisierbaren Vorteile für mikroelektromechanische Messvorrichtungen zugänglich.

Ein ringförmiger mikroelektromechanischer Drehratensensor weist eine mikroelektromechanische Kopplungsvorrichtung wie sie oben beschrieben wurde auf, wobei die Ringstruktur geeignet ist, eine Anregungsschwingung auszuführen, der bei einer Drehung der Ringstruktur eine durch die Corioliskraft erzeugte Detektionsschwingung überlagert wird. Die Federelemente können hierbei die mikroelektromechanischen Komponenten darstellen.

Die Erfindung wird im Folgenden mit Bezug auf die Figuren weiter beschrieben. Die Figuren und ihre Beschreibung sind dabei rein beispielhaft. Die vorliegende Erfindung ist allein durch den Gegenstand der Ansprüche definiert. Es zeigt:
- **Fig. 1A und 1B**: eine schematische Darstellung einer mikroelektromechanischen Kopplungsvorrichtung;
- **Fig. 2**: eine schematische Darstellung eines als Serpentinenfeder ausgebildeten Federelements;
- **Fig. 3**: eine schematische Darstellung einer weiteren Kopplungsvorrichtung;
- **Fig. 4**: eine schematische Darstellung einer weiteren Kopplungsvorrichtung; und
- **Fig. 5**: eine schematische Darstellung einer mikroelektromechanischen Messvorrichtung.

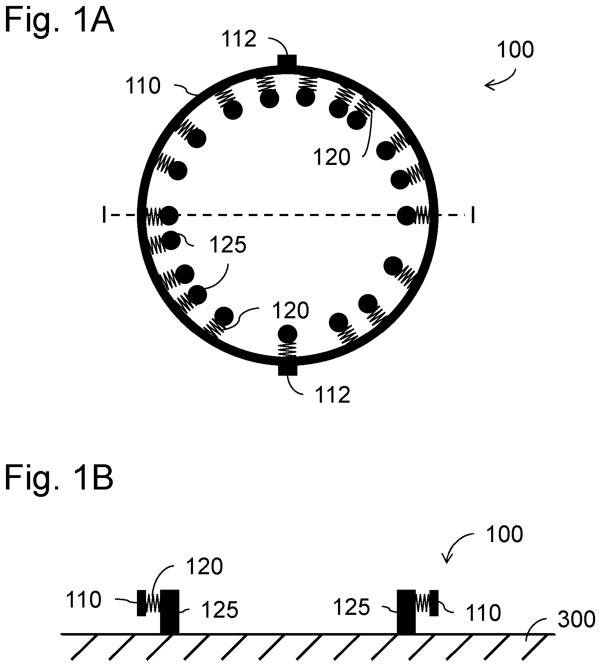

Die Fig. 1A und 1B zeigen eine schematische Darstellung einer mikroelektromechanischen Kopplungsvorrichtung 100, die zum Koppeln von mikroelektromechanischen Komponenten 200 geeignet ist, wie sie z.B. in mikroelektromechanischen Messvorrichtungen, wie Drehraten- und/oder Beschleunigungssensoren verwendet werden. Die mikroelektromechanische Kopplungsvorrichtung 100 kann auch die Grundstruktur eines ringförmigen Drehratensensors bilden. Die Fig. 1B ist hierbei ein Schnitt durch die Fig. 1A entlang der Linie I-I.

Die Kopplungsvorrichtung 100 weist eine flexible Ringstruktur 110 sowie eine Mehrzahl von Federelementen 120 auf. Die Ringstruktur formt wie in der Fig. 1A gezeigt in Ruhe einen Kreis und kann im Wesentlichen parallel zu der Ebene des Kreises verformt werden. Wie aus der Fig. 1B ersichtlich hat die Ringstruktur 110 senkrecht zur Kreisebene bzw. senkrecht zu einem Substrat 300 über dem die Ringstruktur 110 gelagert ist, einen im Wesentlichen rechteckigen Querschnitt mit senkrecht zum Substrat 300 stehenden Längsseiten, die um ein Vielfaches länger sind als die parallel zum Substrat 300 stehenden kurzen Seiten. Die Ringstruktur 110 kann also z.B. als in sich geschlossene Biegebalkenfeder betrachtet werden, die sich parallel zum Substrat 300 verformen kann, wobei Verformungen senkrecht zum Substrat 300 (in erster Näherung) vernachlässigbar sind. Die gezeigte Form der Ringstruktur 110 ist hierbei rein beispielhaft. Die Ringstruktur 110 kann jede Form haben, die eine Verformung im Wesentlichen nur parallel zur Substratebene begünstigt. Auch kann die Ringstruktur 110 in der Ruhelage eine entartete Kreisform aufweisen und z.B. als Ellipse oder als Vieleck mit abgerundeten Ecken ausgebildet sein. Derartige entartete Kreisformen sollen also durch den Bezug auf die kreisförmige Ringstruktur 110 mit abgedeckt sein.

An der Ringstruktur 110 sind Kopplungsstellen 112 angedeutet, an denen die zu koppelnden mikroelektromechanischen Komponenten 200 angreifen bzw. an denen diese Komponenten 200 mit der Ringstruktur 110 verbunden sind. Durch die Kopplung können Bewegungen zwischen den mikroelektromechanischen Komponenten 200 übertragen oder abgestimmt werden. Insbesondere kann die Kopplungsvorrichtung eine kräfte- und momentenfreie Gegentaktschwingung zwischen den Komponenten 200 vermitteln. Bei den mikroelektromechanischen Komponenten 200 kann es sich z.B. um Sensormassen oder Schwingungssysteme handeln. Im Prinzip ist die Art, Struktur und Größe der zu koppelnden Komponenten 200 aber beliebig. Ebenso kann die Anzahl der zu Komponenten 200 größer als zwei sein.

Die Kopplung kann hierbei auch über die Federelemente 120 erfolgen. Dann fehlen die Kopplungsstellen 112. Insbesondere wenn die Kopplungsvorrichtung 100 Teil eines ringförmigen mikroelektromechanischen Drehratensensors ist, können die Federelemente 120 die mikroelektromechanischen Komponenten darstellen. Die Ringstruktur ist hierbei geeignet, eine Anregungsschwingung auszuführen, der bei einer Drehung der Ringstruktur eine durch die Corioliskraft erzeugte Detektionsschwingung überlagert wird.

Die Ringstruktur ist über eine Mehrzahl von Federelementen 120 mit dem Substrat 300 verbunden. Die Federelemente 120 greifen hierbei an verschiedenen Stellen der Ringstruktur 110 an und halten diese über dem Substrat 300. Wie in den Fig. 1A und 1B gezeigt können die Federelemente 120 mit Ankerstrukturen 125 verbunden sein und die Ringstruktur 110 so direkt mit dem Substrat 300 verbinden. Die Ankerstrukturen 125 können hierbei eine beliebige Form aufweisen, solange sie eine feststehende Verbindung zum Substrat 300 erlauben.

Die Kopplungsvorrichtung 100 weist hierbei eine ausreichend große Anzahl von Federelementen 120, mit einer derart geringen Breite in Umfangsrichtung der Ringstruktur 110 und einer derart geringen Federhärte auf, dass die Verformbarkeit der Ringstruktur 110 in Umfangsrichtung der Ringstruktur 110 homogen ist und die Kopplungsvorrichtung 100 Resonanzfrequenzen im kHz-Bereich aufweist. Insbesondere können Breite und Anzahl der Federelemente 120 derart abgestimmt sein, dass die Federelemente 120 so dicht wie möglich nebeneinander liegen, ohne die gewünschte Beweglichkeit der Federelemente 120 einzuschränken. Andererseits können bei ausreichend geringer Federhärte der Federelemente 120 auch ein größerer Abstand bzw. breitere Federelemente 120 ausreichend für eine homogene Verformbarkeit der Ringstruktur sein.

Die Anzahl der Federelemente 120 kann zum Beispiel größer oder gleich 4, 8, 16, 30, größer oder gleich 40, oder größer oder gleich 50 sein. Entsprechend oder unabhängig von ihrer Anzahl kann die Breite der Federelemente 120 kleiner oder gleich 1/4, 1/8, 1/16, 1/30, kleiner oder gleich 1/40, oder kleiner oder gleich 1/50 des Umfangs der Ringstruktur 110 sein.

Die Vielzahl der Angriffspunkte von Federelementen 120 an die Ringstruktur 110 stellt sicher, dass gegen Krafteinwirkungen auf die Ringstruktur 110 mit einer Federhärte geantwortet wird, die sich aus der Federhärte der Ringstruktur 110 und den Federhärten der durch die Krafteinwirkung verformten Federelemente 120 ergibt, wobei die Gesamtfederhärte in Umfangsrichtung im Wesentlichen gleich ist. Damit reagiert die Kopplungsvorrichtung 100 auf Krafteinwirkungen aus jeder Richtung gleich, d.h. sie hat eine homogene Verformbarkeit. Die gesamte Kopplungsvorrichtung 100 reagiert also auf äußere Anregungen wie ein translatorisch fixierter, aber ansonsten frei schwebender Ring.

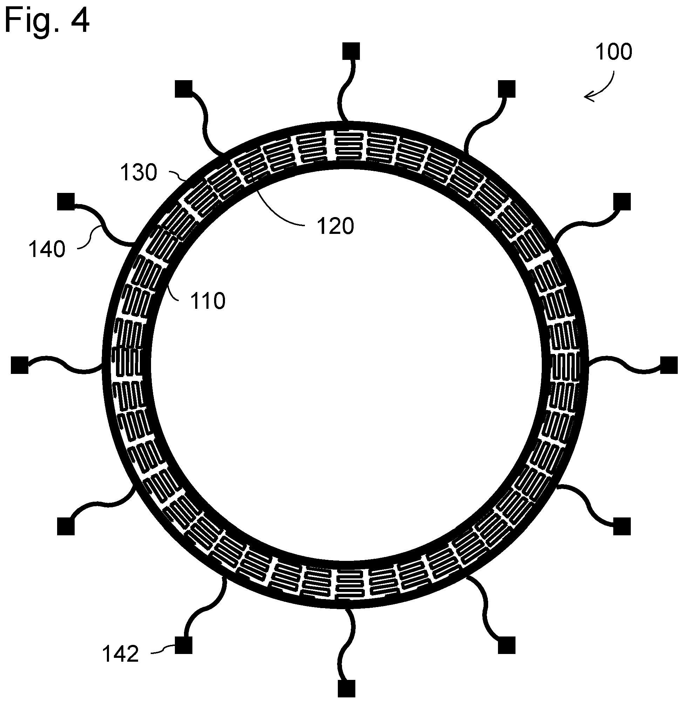

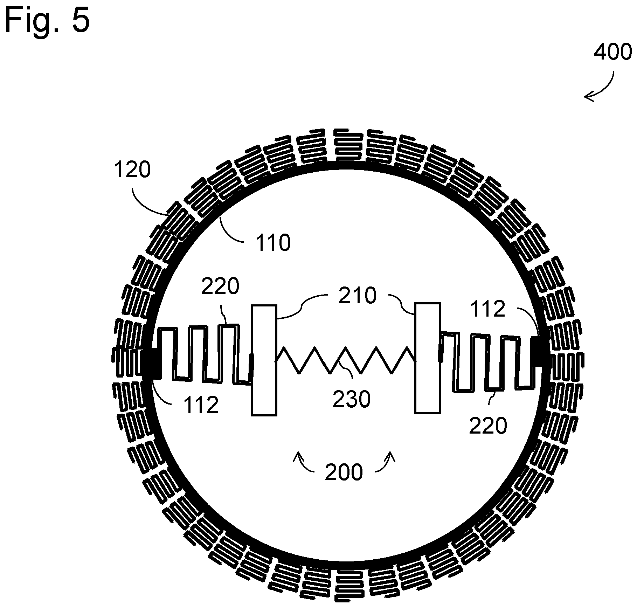

Wie in der Fig. 1A gezeigt können alle Federelemente 120 mit einer Innenseite der Ringstruktur 110 verbunden sein. Die Federelemente 120 können aber auch mit einer Außenseite der Ringstruktur 110 verbunden sein, wie, z.B. in den Fig. 4 und 5 gezeigt. Durch die Anordnung sämtlicher Federelemente 120 außerhalb oder innerhalb der Ringstruktur 110 kann sichergestellt werden, dass die mikroelektromechanischen Komponenten 200 (bei entsprechender Wahl der Lage der Kopplungsstellen 112) kräfte- und momentenfrei gekoppelt werden können. Die Federelemente 120 können im Prinzip aber auch von beiden Seiten an die Ringstruktur 110 angreifen.

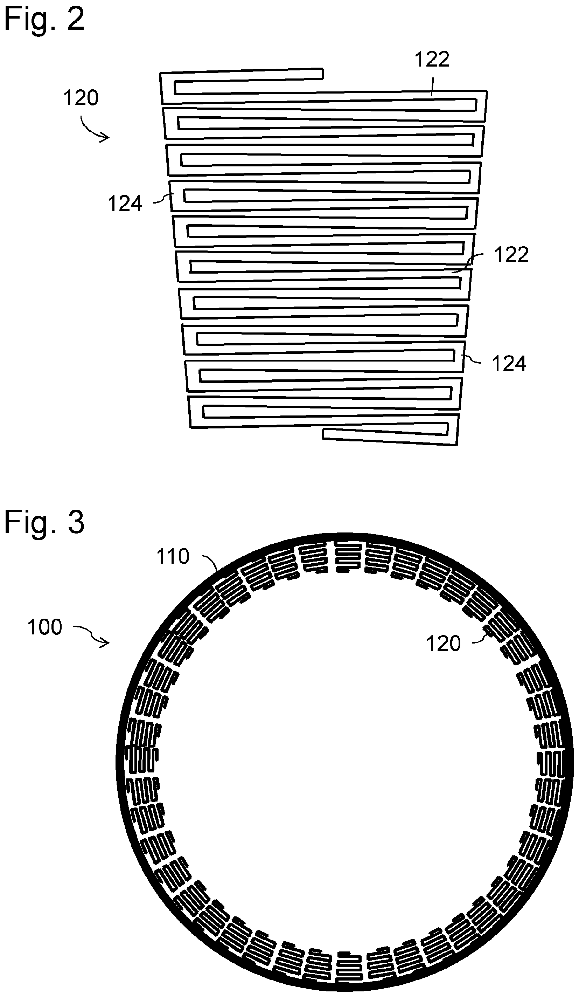

Wie in den Fig. 3 bis 5 gezeigt, können die Federelemente 120 gleichmäßig entlang der Umfangsrichtung der Ringstruktur 110 verteilt sein. Dies vereinfacht die Herstellung der Kopplungsvorrichtung 100, da all Federelemente 120 gleich gefertigt werden können. Die daraus resultierende gleiche Federhärte der Federelemente 120 garantiert in Kombination mit der gleichmäßigen Verteilung entlang des Umfangs der Ringstruktur 110, dass eine Krafteinwirkung auf die Kopplungsvorrichtung 100 an allen Stellen der Kopplungsvorrichtung 100 die gleiche Gegenkraft hervorruft.

Wie in der Fig. 1A gezeigt können die Federelemente 120 entlang der Umfangsrichtung der Ringstruktur 110 auch unregelmäßig verteilt sein. Dann müssen die Federhärten der verschiedenen Federelemente 120 derart variieren, dass im Resultat trotzdem eine homogene Verformbarkeit der Ringstruktur 110 erreicht werden kann. Zum Beispiel können die Federelemente 120 in Bereichen mit einer höheren Dichte von Federelementen 120 geringere Federhärten aufweisen als in Bereichen mit einer niedrigen Dichte von Federelementen 120.

Neben einer Beschränkung der Breite der Federelemente 120 entlang der Umfangsrichtung empfiehlt es sich, auch die Länge der Federelemente 120 entlang einer radialen Richtung der Ringstruktur 110 auf weniger als 1/2, weniger als 1/4, weniger als 1/5, weniger als 1/6, weniger als 1/8 oder auf 1/10 des Radius der in Ruhe befindlichen Ringstruktur 110 zu begrenzen. Dadurch können kompaktere mikroelektromechanische Strukturen realisiert werden, da auch der Innenraum der Kopplungsvorrichtung 100 für die Anordnung von mikroelektromechanischen Komponenten 200 genutzt werden kann, wie z.B. in der Fig. 5 gezeigt.

Die Federelemente 120 sind in den Fig. 1A und 1B vollkommen schematisch durch Spiralfedersymbole dargestellt. Die Federelemente 120 können aber jede beliebige Form aufweisen, solange eine ausreichend geringe Federhärte erreicht werden kann.

Als besonders vorteilhaft hat sich zum Beispiel die Ausbildung der Federelemente 120 als Serpentinenfedern gezeigt. Ein Beispiel für eine Serpentinenfeder ist schematisch in der Fig. 2 gezeigt. Die Serpentinenfeder weist eine Vielzahl von Querfedern 122 auf, die z.B. durch Biegebalkenfedern ausgebildet sind, deren Hauptauslenkungsrichtung parallel zum Substrat 300 liegt. Die Querfedern 122 sind an ihren Enden alternierend mit Federstegen 124 derart verbunden, dass eine serpentinenförmige Feder entsteht. Die Federstege 124 können hierbei auch stark verkürzt oder weggelassen sein, so dass im Wesentlichen eine Zickzacklinie entsteht. Die Fig. 2 zeigt hierbei nur die prinzipielle Grundstruktur. Die einzelnen Elemente der Serpentinenfeder können auch anders ausgebildet sein. Zum Beispiel können die Querfedern 122 auch als eine Reihe von Kreisbögen ausgebildet sein, insbesondere von konzentrischen Kreisen. Auch müssen die Federstege 124 oder allgemein die Verbindungen zwischen den Querfedern 124 nicht fluchtend angeordnet sein, sondern können auch zueinander versetzt sein. Die Serpentinenfeder stellt im Wesentlichen eine mehrfach gebogene bzw. geknickte Biegebalkenfeder in Mäanderform dar.

Aufgrund dieser Struktur ist die Serpentinenfeder weich gegenüber Auslenkungen in der Ebene der Mäander (Bildebene der Fig. 2), jedoch relativ hart gegenüber Auslenkungen senkrecht hierzu (senkrecht zur Bildebene der Fig. 2). Diese Eigenschaft behält die Feder auch bei einem schmalen Aufbau, d.h. wenn bei minimaler Länger der Federstege 124, die zum Verbinden der Querfedern 122 nötig ist, die Querfedern 122 nicht länger als das 30-fache, 20-fache oder 10-fache der Länge der Federstege 124 beträgt. Serpentinenfedern eignen sich demgemäß als Federelemente 120 für die Kopplungsvorrichtung 100.

Ein Beispiel für eine derartige Kopplungsvorrichtung 100, die z.B. die Grundstruktur für einen ringförmigen mikroelektrischen Drehratensensor darstellen kann, ist in der Fig. 3 gezeigt. Die Kopplungsvorrichtung weist hierbei beispielhaft 44 als Serpentinenfedern ausgebildete Federelemente 120 auf, die in gleichmäßigen Abständen an die Innenseite der Ringstruktur 110 angreifen. Die Breite der Federelemente 120 beträgt hierbei etwas weniger als 1/44 des Innenumfangs der Ringstruktur 110, so dass keine Lücke zwischen den einzelnen Federelementen 120 verbleibt.

Ein weiteres Beispiel für eine Kopplungsvorrichtung 100 ist in der Fig. 4 gezeigt. Hier weist die Kopplungsvorrichtung 100 neben der Ringstruktur 110 und den (hier außen an die Ringstruktur 110 angreifenden) Federelementen 120 (hier beispielhaft als Serpentinenfedern dargestellt) eine zweite Ringstruktur 130 auf. Diese ist über die Mehrzahl der Federelemente 120 mit der (ersten) Ringstruktur 110 verbunden. Die Verbindung der ersten Ringstruktur 110 mit dem Substrat 300 erfolgt hierbei über die zweite Ringstruktur 130.

Dieser Aufbau bietet mehr Flexibilität hinsichtlich der Einsatzbereiche der Kopplungsvorrichtung 100. Insbesondere kann die Kopplungsvorrichtung 100 auch in Messvorrichtungen eingesetzt werden, die eine direkte Verankerung der Federelemente 120 nicht erlauben. Zudem kann durch die Kombination mit einer oder mehreren zusätzlichen Ringstrukturen 130 das Schwingungsverhalten der Ringstruktur 110 beeinflusst werden, z.B. durch Unterdrücken von bestimmten Schwingungsmoden, oder die Flexibilität, insbesondere in Umfangsrichtung, vergrößert werden. Die Verankerung der zusätzlichen Ringstruktur(en) 130 kann über beliebige Verbindungen hergestellt werden. Beispielhaft ist in der Fig. 4 z.B. die Verbindung über speichenartige Federn 140 und Ankerblöcke 142 gezeigt. Es ist aber auch jede andere Form der Verankerung am Substrat denkbar, z.B. über Serpentinenfedern oder auch über mehrstufig oder komplexere mikroelektromechanische Komponenten, wie z.B. Schwingungssysteme, Massen, Antriebs- und Ausleseelektroden oder dergleichen.

Die Fig. 5 zeigt schematisch eine mikroelektromechanische Messvorrichtung 400, in der eine mikroelektromechanische Kopplungsvorrichtung 100 verwendet wird, wie sie zuvor beschrieben wurde.

Neben der Ringstruktur 110 und den hier außen an die Ringstruktur 110 angreifenden Federelementen (beispielhaft als Serpentinenfedern und ohne Verankerung im Substrat gezeigt) weist die Messvorrichtung als mikroelektromechanische Komponenten 200 zwei Schwingungssysteme auf, die mit der Kopplungsvorrichtung 100 über die Kopplungsstellen 112 verbunden sind. Die mikroelektromechanischen Komponenten 200 weisen z.B. jeweils eine Masse 210 und eine Federstruktur 220 auf, die die Masse 210 mit der Ringstruktur 110 der Kopplungsvorrichtung 100 verbindet. Zudem ist beispielhaft eine weitere Kopplung 230 zwischen den Massen 210 gezeigt. Wie in der Fig. 5 zu sehen ist, kann der Innenraum der Kopplungsvorrichtung 100 für die Anordnung der mikroelektromechanischen Komponenten 200 verwendet werden, was eine kompakte Ausgestaltung der Messvorrichtung 400 erlaubt.

Es versteht sich von selbst, dass bei innenliegenden Federelementen 120 die mikroelektromechanischen Komponenten 200 auch außen angeordnet sein können. Zudem können bei entsprechend schmalen Kopplungsstellen 112 die Federelemente 120 und die mikroelektromechanischen Komponenten 200 auch auf der gleichen Seite der Ringstruktur 110 angeordnet sein.

Durch die oben beschriebenen Ausgestaltungen von 110 Ringstruktur und Federelementen 120 ist gewährleistet, dass die mikroelektromechanischen Komponenten 200 in optimaler Weise miteinander gekoppelt werden können. Hierdurch erhöhen sich schlussendlich die Präzision und damit die Verlässlichkeit der Messvorrichtung 400.

Zudem lassen sich sämtliche oben diskutierten Kopplungsvorrichtungen als Grundkomponenten für ringförmige mikroelektromechanische Drehratensensoren verwenden, in denen die Ringstruktur die für die Drehratendetektion notwendigen Schwingungen vollführt.

## Patentansprüche

1. Mikroelektromechanische Kopplungsvorrichtung (100) zum Koppeln von mikroelektromechanischen Komponenten (200), aufweisend
eine flexible Ringstruktur (110), die in Ruhe einen Kreis formt, die im Wesentlichen parallel zu der Ebene des Kreises verformt werden kann und die zur Kopplung der mikroelektromechanischen Komponenten (200) geeignet ist; und
eine Mehrzahl von mit der Ringstruktur gekoppelten Federelementen (120), die geeignet sind, die Ringstruktur (110) mit einem Substrat (300) zu verbinden; wobei
die Kopplungsvorrichtung (100) eine derart große Anzahl der Federelemente (120), mit einer derartigen Breite in Umfangsrichtung der Ringstruktur (110) und einer derartigen Federhärte aufweist, dass die Verformbarkeit der Ringstruktur (110) in Umfangsrichtung der Ringstruktur (110) homogen ist; und
das Verhältnis einer effektiven Gesamtsteifigkeit der Federelemente (120) während eines Betriebs der Kopplungsvorrichtung (100) in einer Schwingungsmode zum Produkt aus einer Anzahl der Federelemente (120) und einer effektiven Steifigkeit der Ringstruktur (110) in der entsprechenden Schwingungsmode kleiner oder gleich 1 ist.

2. Kopplungsvorrichtung (100) nach einem der vorherigen Ansprüche, wobei
entweder alle Federelemente (120) mit einer Innenseite der Ringstruktur (110) oder alle Federelemente (120) mit einer Außenseite der Ringstruktur (110) verbunden sind.

3. Kopplungsvorrichtung (100) nach einem der vorherigen Ansprüche, wobei
die Federelemente (120) als Serpentinenfedern ausgebildet sind.

4. Kopplungsvorrichtung (100) nach einem der vorherigen Ansprüche, wobei
die Federelemente (120) gleichmäßig entlang der Umfangsrichtung der Ringstruktur (110) verteilt sind.

5. Kopplungsvorrichtung (100) nach einem der vorherigen Ansprüche, wobei
die Anzahl der Federelemente (120) größer oder gleich 4, vorzugsweise größer oder gleich 8, weiter vorzugsweise größer oder gleich 16 ist.

6. Kopplungsvorrichtung (100) nach einem der vorherigen Ansprüche, wobei
die Breite der Federelemente (120) in Umfangsrichtung kleiner oder gleich 1/4, vorzugsweise kleiner oder gleich 1/8, weiter vorzugsweise kleiner oder gleich 1/16 des Umfangs der Ringstruktur (110) ist.

7. Kopplungsvorrichtung (100) nach einem der vorherigen Ansprüche, wobei
die Federelemente (120) sich entlang einer radialen Richtung der Ringstruktur (110) über weniger als 1/2 oder 1/4, vorzugsweise über weniger als 1/5, weiter vorzugsweise über weniger als 1/8 des Radius der in Ruhe befindlichen Ringstruktur (110) erstrecken.

8. Kopplungsvorrichtung (100) nach einem der vorherigen Ansprüche, des Weiteren mit
einer zweiten Ringstruktur (130), wobei
die Mehrzahl der Federelemente (120) mit der Ringstruktur (110) und der zweiten Ringstruktur (130) verbunden ist und die Verbindung der Ringstruktur (110) mit dem Substrat (300) über die zweite Ringstruktur (130) erfolgt, welche vorzugsweise wiederum mit weiteren Federelementen (140) an das Substrat angebunden ist.

9. Mikroelektromechanische Messvorrichtung (400) mit
der mikroelektromechanischen Kopplungsvorrichtung (100) nach einem der vorherigen Ansprüche; und
den mikroelektromechanischen Komponenten (200), die mit der Kopplungsvorrichtung (100) verbunden sind.

10. Ringförmiger mikroelektromechanischer Drehratensensor mit
der mikroelektromechanischen Kopplungsvorrichtung (100) nach einem der vorherigen Ansprüche; wobei
die Ringstruktur (110) geeignet ist, eine Anregungsschwingung auszuführen, der bei einer Drehung der Ringstruktur (110) eine durch die Corioliskraft erzeugte Detektionsschwingung überlagert wird; und
die Federelemente (120) die mikroelektromechanischen Komponenten darstellen.

## Claims

1. A microelectromechanical coupling device (100) for coupling microelectromechanical components (200), comprising:
a flexible ring structure (110) which forms a circle at rest, which can be deformed substantially parallel to the plane of the circle and which is suitable for coupling the microelectromechanical components (200); and
a plurality of spring elements (120) coupled to the ring structure which are suitable for connecting the ring structure (110) to a substrate (300); wherein
the coupling device (100) has such a large number of spring elements (120) with such a width in a circumferential direction of the ring structure (110) and such a spring hardness that the deformability of the ring structure (110) is homogeneous in a circumferential direction of the ring structure (110); and
the ratio of an effective overall stiffness of the spring elements (120) during operation of the coupling device (100) in an oscillation mode to the product from a number of spring elements (120) and an effective stiffness of the ring structure (110) in the corresponding oscillation mode is less than or equal to 1.

2. The coupling device (100) according to any one of the preceding claims, wherein
either all the spring elements (120) are connected to an inner side of the ring structure (110) or all the spring elements (120) are connected to an outer side of the ring structure (110).

3. The coupling device (100) according to any one of the preceding claims, wherein
the spring elements (120) are designed as serpentine springs.

4. The coupling device (100) according to any one of the preceding claims, wherein
the spring elements (120) are evenly distributed along the circumferential direction of the ring structure (110).

5. The coupling device (100) according to any one of the preceding claims, wherein
the number of spring elements (120) is greater than or equal to 4, preferably greater than or equal to 8, more preferably greater than or equal to 16.

6. The coupling device (100) according to any one of the preceding claims, wherein
the width of the spring elements (120) in circumferential direction is less than or equal to 1/4, preferably less than or equal to 1/8, more preferably less than or equal to 1/16 of the circumference of the ring structure (110).

7. The coupling device (100) according to any one of the preceding claims, wherein
the spring elements (120) extend along a radial direction of the ring structure (110) over less than 1/2 or 1/4, preferably over less than 1/5, more preferably over less than 1/8 of the radius of the ring structure (110) at rest.

8. The coupling device (100) according to any one of the preceding claims, further comprising:
a second ring structure (130), wherein
the plurality of spring elements (120) is connected to the ring structure (110) and to the second ring structure (130), and the ring structure (110) is connected to the substrate (300) via the second ring structure (130), which, in turn, is preferably connected to the substrate by additional spring elements (140).

9. A microelectromechanical measuring device (400), comprising:
the microelectromechanical coupling device (100) according to any one of the preceding claims; and
the microelectromechanical components (200) that are connected to the coupling device (100).

10. An annular microelectromechanical angular rate sensor, comprising:
the microelectromechanical coupling device (100) according to any one of the preceding claims; wherein
the ring structure (110) is suitable for producing an excitation oscillation, said excitation oscillation being superimposed with a detection oscillation generated by the Coriolis force during a rotation of the ring structure (110); and
the spring elements (120) constitute the microelectromechanical components.

## Revendications

1. Dispositif de couplage microélectromécanique (100) pour coupler des composants microélectromécaniques (200), comprenant
une structure annulaire flexible (110) qui, au repos, forme un cercle, qui peut être déformée de manière sensiblement parallèle au plan du cercle, et qui est propre au couplage des composants microélectromécaniques (200) ; et
une pluralité d'éléments de ressorts (120) couplés à la structure annulaire, qui sont propres à relier la structure annulaire (110) à un substrat (300) ; dans lequel
le dispositif de couplage (100) comporte un nombre d'éléments de ressorts (120) tel, avec une telle largeur dans la direction circonférentielle de la structure annulaire (110) et une telle raideur de ressort, que la déformabilité de la structure annulaire (110) soit homogène dans la direction circonférentielle de la structure annulaire (110) ; et
le rapport de la rigidité effective totale des éléments de ressorts (120) pendant un fonctionnement du dispositif de couplage (100) dans un mode de vibration au produit d'un nombre des éléments de ressorts (120) et de la rigidité effective de la structure annulaire (110) dans le mode de vibration correspondant est inférieur ou égal à 1.

2. Dispositif de couplage (100) selon l'une des revendications précédentes, dans lequel
soit tous les éléments de ressorts (120) sont reliés à un côté intérieur de la structure annulaire (110), soit tous les éléments de ressorts (120) sont reliés à un côté extérieur de la structure annulaire (110).

3. Dispositif de couplage (100) selon l'une des revendications précédentes, dans lequel
les éléments de ressorts (120) sont conformés en ressorts serpentins.

4. Dispositif de couplage (100) selon l'une des revendications précédentes, dans lequel
les éléments de ressorts (120) sont répartis régulièrement le long de la direction circonférentielle de la structure annulaire (110).

5. Dispositif de couplage (100) selon l'une des revendications précédentes, dans lequel
le nombre d'éléments de ressorts (120) est supérieur ou égal à 4, de préférence supérieur ou égal à 8, et de préférence encore supérieur ou égal à 16.

6. Dispositif de couplage (100) selon l'une des revendications précédentes, dans lequel
la largeur des éléments de ressorts (120) dans la direction circonférentielle est inférieure ou égale à 1/4 de la circonférence de la structure annulaire (110), de préférence inférieure ou égale à 1/8, et de préférence encore inférieure ou égale à 1/16.

7. Dispositif de couplage (100) selon l'une des revendications précédentes, dans lequel
les éléments de ressorts (120) s'étendent le long d'une direction radiale de la structure annulaire (110) sur moins de 1/2 ou 1/4 du rayon de la structure annulaire (110) au repos, de préférence sur moins de 1/5, et de préférence encore sur moins de 1/8.

8. Dispositif de couplage (100) selon l'une des revendications précédentes, comprenant en outre une seconde structure annulaire (130), dans lequel
la pluralité d'éléments de ressorts (120) est reliée à la structure annulaire (110) et à la seconde structure annulaire (130), et la liaison de la structure annulaire (110) au substrat (300) s'effectue par l'intermédiaire de la seconde structure annulaire (130), laquelle est de préférence à son tour reliée au substrat par d'autres éléments de ressorts (140).

9. Dispositif de mesure microélectromécanique (400) comprenant
le dispositif de couplage microélectromécanique (100) selon l'une des revendications précédentes ; et
les composants microélectromécaniques (200) reliés au dispositif de couplage (100).

10. Capteur de vitesse de rotation microélectromécanique annulaire comprenant
le dispositif de couplage microélectromécanique (100) selon l'une des revendications précédentes ; dans lequel
la structure annulaire (110) est propre à effectuer une oscillation d'excitation à laquelle se superpose, lors d'une rotation de la structure annulaire (110), une oscillation de détection générée par la force de Coriolis ; et
les éléments de ressorts (120) constituent les composants microélectromécaniques.
